# EUROPÄISCHE PATENTSCHRIFT

(11) **EP 3 337 649 B1**
(45) Veröffentlichungstag und Bekanntmachung des Hinweises auf die Patenterteilung: **08.05.2019**
(21) Anmeldenummer: 16757837.6
(22) Anmeldetag: 16.08.2016
(51) Int. Cl.: B29C 33/42, B29C 45/00, F02M 37/22

(54) **VERFAHREN ZUR HERSTELLUNG EINES WASSERSTANDSENSORS UND WASSERSTANDSENSOR**
METHOD FOR PRODUCING A WATER LEVEL SENSOR AND SENSOR
PROCÉDÉ DE RÉALISATION D'UN CAPTEUR DE NIVEAU D'EAU ET CAPTEUR DE NIVEAU D'EAU

(30) Priorität: 21.08.2015 DE 102015216017
(43) Veröffentlichungstag der Anmeldung: 27.06.2018
(73) Patentinhaber: Mahle International GmbH, 70376 Stuttgart (DE)
(72) Erfinder: DOBERNIG, Daniel, 9130 Poggersdorf (AT); PFEIFFER, Gert, 9020 Klagenfurt (AT); SCHADLER, Werner, 8430 Seggauberg (AT); ZOTTER, Peter, 8334 Lödersdorf (AT)
(74) Vertreter: BRP Renaud & Partner mbB Rechtsanwälte Patentanwälte Steuerberater
(86) Internationale Anmeldenummer: PCT/EP2016/069417
(87) Internationale Veröffentlichungsnummer: WO 2017/032643

(56) Entgegenhaltungen:
- WO-A2-2008/142428
- DE-A1-102004 008 263

## Beschreibung

Die vorliegende Erfindung betrifft ein Verfahren zur Herstellung eines Wasserstandsensors eines Kraftstofffilters aus Kunststoff. Die Erfindung betrifft außerdem einen mit diesem Verfahren hergestellten Wasserstandsensor sowie ein Kraftstofffilter mit zumindest einem solchen Wasserstandsensor.

Wasserstandsensoren werden in Kraftstofffiltern verwendet, um das kontinuierlich aus dem Kraftstoff abgeschiedene Wasser hinsichtlich seiner Menge zu erfassen und temporär abzulassen. Derartige Wasserstandsensoren werden dabei üblicherweise in Wassersammelräumen angeordnet und melden einen dort vorhandenen Wasserstand kontinuierlich oder zyklisch an eine Steuereinrichtung, welche bei Erreichen eines vordefinierten Wasserstandes ein Signal erzeugt und beispielsweise das im Wassersammelraum gesammelte Wasser abführt.

Üblicherweise werden die hierfür eingesetzten Wasserstandsensoren als Kunststoffspritzgussteile mit elektrisch leitenden Polen ausgebildet, wobei über die elektrisch leitenden Pole und das Wasser eine elektrisch leitende Verbindung geschaffen werden kann, welche über den jeweils im Wassersammelraum vorhandenen Wasserstand informiert. Die elektrisch leitenden Pole können dabei beispielsweise in der Art von Leitungen ausgebildet sein, wobei zunehmend auch elektrisch leitende Kunststoffe Anwendung finden, die beispielsweise elektrisch leitende Fasern, wie insbesondere Kohlefasern, aufweisen.

Werden dabei Wasserstandsensoren mit einem klassischen Kunststoffspritzgussvorgang hergestellt, so erzeugt eine glatte Oberfläche in der Kunststoffspritzgussform bzw. im Spritzgusswerkzeug eine sogenannte Spritzhaut, da sich die im gespritzten Kunststoff angeordneten Fasern im Wesentlichen parallel zur Wandoberfläche der Kunststoffspritzgussform ausrichten. Die erzeugte Spritzhaut weist jedoch eine gegenüber dem restlichen Kunststoffmaterial mit dem entsprechenden Faseranteil eine isolierende Wirkung auf, da beim Spritzgussvorgang an der Oberfläche keine Fasern mehr vorhanden sind oder lediglich ein nur verringerter Faseranteil. Hierdurch werden sowohl die elektrische Leitfähigkeit an der Oberfläche des Wasserstandsensors als darüber auch die Messgenauigkeit negativ beeinträchtigt.

Aus der WO 2008/142428 A2 ist ein Verfahren zur Herstellung eines Kraftstofffilters aus elektrisch leitendem Kunststoff bekannt.

Aus der DE 10 2004 054 625 A1 ist ein Füllstandsensor bekannt, mit einem Heizelement mit einem Kunststoffwiderstandsmaterial.

Die vorliegende Erfindung beschäftigt sich daher mit dem Problem, ein Verfahren zur Herstellung eines Wasserstandsensors anzugeben, welches die aus dem Stand der Technik bekannten Nachteile nicht mehr aufweist.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, einen Faseranteil im Bereich einer Oberfläche eines als Kunststoffspritzgussteil ausgebildeten Wasserstandsensors zu erhöhen und dadurch die elektrische Leitfähigkeit des Wasserstandsensors an der Oberfläche und darüber auch die Messgenauigkeit steigern zu können. Bei dem erfindungsgemäßen Verfahren wird ein faserverstärkter und elektrisch leitender Kunststoff in eine Kunststoffspritzgussform eingespritzt, wobei zur Steigerung des Faseranteils an der Oberfläche des Spritzlings nunmehr entweder eine Kunststoffspritzgussform mit einer rauen, insbesondere einer genarbten, Oberfläche verwendet wird oder aber eine Kunststoffspritzgussform mit einer glatten Oberfläche, wobei in diesem Fall die nunmehr auch glatte Oberfläche des gespritzten Wasserstandsensors nachträglich aufgeraut wird. Beide alternativen und gleichwertigen Verfahren bewirken jedoch, dass beim fertigen Wasserstandsensor zumindest einzelne Fasern an der Oberfläche desselben liegen und dabei die bislang reduzierte elektrische Leitfähigkeit an der Oberfläche deutlich gesteigert werden kann. Erfindungsgemäß ist dabei der elektrisch leitfähige Kunststoff ein faserverstärkter Thermoplast mit Kohlefasern mit zumindest 8 Gew.-%, vorzugsweise ca. 40 Gew.-%, oder mit Metallfasern. Durch die Narbung des Kunststoffspritzgusswerkzeugs bzw. der Kunststoffspritzgussform kann ein anderer Strömungsverlauf in der Kunststoffspritzgussform erreicht werden, wodurch die bislang laminare Strömung entlang der glatten Oberflächen der Kunststoffspritzgussformen, welche zu einer parallelen Faserausrichtung zur Oberfläche führen, vermieden werden können. Durch die raue Oberfläche der Kunststoffspritzgussform kommt es an der Oberfläche zu Turbulenzen, welche die Fasern unstrukturiert verteilen und somit bis an die Oberfläche führen, so dass auch an der Oberfläche vorzugsweise dieselbe elektrische Leitfähigkeit vorhanden ist, wie in tiefer gelegenen Schichten.

Bei einer vorteilhaften Weiterbildung des erfindungsgemäßen Verfahrens gemäß der ersten Alternative wird eine Kunststoffspritzgussform mit einer Oberflächenrauigkeit von 0,01 mm bis 0,1 mm verwendet. Bereits diese geringfügigen Oberflächenrauigkeiten ermöglichen die turbulente Strömung des in die Kunststoffspritzgussform eingespritzten Kunststoffs, woraufhin sich die darin enthaltenen Fasern unstrukturiert ausrichten und dadurch auch bis an eine Oberfläche des späteren Wasserstandsensors reichen, bzw. auch in und/oder an der Oberfläche des Wasserstandsensors angeordnet sind. Die Oberflächenrauigkeit kann dabei unstrukturiert oder aber beispielsweise in quer zur Spritzgussrichtung verlaufenden Narben, Rillen und/oder Wellen ausgebildet sein.

Bei einer weiteren vorteilhaften Ausführungsform des erfindungsgemäßen Verfahrens gemäß der zweiten Alternative wird die Oberfläche des Wasserstandsensors mittels Sandstrahlen oder mittels CO₂-Strahlen aufgeraut. In diesem Fall wird somit der Wasserstandsensor zunächst mit einem herkömmlichen Kunststoffspritzgusswerkzeug bzw. einer herkömmlichen Kunststoffspritzgussform mit glatter Oberfläche gespritzt und erst in fertigem Zustand durch die genannten Strahlverfahren an seiner Oberfläche aufgeraut. Das CO₂-Strahlen, welche üblicherweise auch als Trockeneis-Strahlen bezeichnet wird, bietet den großen Vorteil, minimal-abrasiv zu sein, sowie in der Tatsache, dass nach dem Strahlen kein Reinigungsmedium zur Entsorgung zurückbleibt, da sich das CO₂ gasförmig in die Umgebungsluft verflüchtigt. Da Trockeneis zu dem relativ weich ist, kann eine besonders fein dosierte Aufrauung der Oberfläche erfolgen. In analoger Weise kann selbstverständlich auch ein Sandstrahlverfahren eingesetzt werden, wobei es sich hierbei um ein Druckluftstrahlen mit festem Strahlmittel handelt. Im Vergleich zum CO₂-Strahlen stellt das Sandstrahlen ein Strahlverfahren mit einer deutlich höheren abrasiven Wirkung des Strahlmittels dar, so dass hierdurch vergleichsweise einfach tiefere Oberflächenrauigkeiten erzielt werden können. Beiden Strahlverfahren ist dabei gemein, dass sie die Spritzhaut abtragen, bis die unter der Spritzhaut liegenden Fasern hervortreten.

Bei einer weiteren vorteilhaften Ausführungsform der erfindungsgemäßen Lösung gemäß der zweiten Alternative wird die Oberfläche des Wasserstandsensors mittels eines Lasers aufgeraut. Ein Aufrauen mittels eines Lasers bietet dabei ebenso wie das CO₂-Strahlen den großen Vorteil, dass keine Strahlrückstände, wie beispielsweise beim Sandstrahlen, verbleiben, und dadurch auch kein Reinigen des gestrahlten Wasserstandsensors erfolgen muss.

Bei einer weiteren vorteilhaften Ausführungsform der erfindungsgemäßen Lösung wird die Oberfläche des Wasserstandsensors chemisch aufgeraut. Hierunter können insbesondere spezielle chemische Ätzverfahren fallen, die eine ungerichtete Struktur bzw. Rauigkeit in die ansonsten glatte Oberfläche des Wasserstandsensors einbringen.

Erfindungsgemäß ist der elektrisch leitfähige Kunststoff ein faserverstärkter Thermoplast mit Kohlefasern mindestens 8 Gew.-%, vorzugsweise 40 Gew.-%, oder Metallfasern.

Durch das Vorsehen von Kohlefasern kann die elektrische Leitfähigkeit verbessert werden. Alternativ ist auch die Zugabe von Ruß möglich. Die im elektrisch leitfähigen Kunststoff vorgesehenen Kohlefasern und/oder der Ruß übernehmen dabei nicht nur die Funktion der elektrischen Leitfähigkeit, sondern steifen den Wasserstandsensor zusätzlich aus. Alternativ können natürlich auch weitere Bestandteile/Zusätze die elektrische Leitfähigkeit des Kunststoffs bewirken, wie z.B. Metallfasern. Selbstverständlich können zusätzlich auch andere Fasern, insbesondere Glasfasern, als Verstärkungselemente vorgesehen sein, durch welche der Wasserstandsensor weiter ausgesteift werden kann.

Bei einer weiteren vorteilhaften Ausführungsform der erfindungsgemäßen Lösung weist der elektrisch leitfähige Kunststoff ein PA66 GF22 CF8 auf und ist damit aus Polyamid 66 sowie 22 Gew.-% Glasfasern und 8 Gew.-% Kohlefasern ausgebildet. Eine alternative Ausführungsform wird durch einen elektrisch leitfähigen Kunststoff aus PA66 CF40 gebildet und besteht somit aus Polyamid 66 und 40 Gew.-% Kohlefasern oder wird durch einen elektrisch leitfähigen Kunststoff aus PA6 CF40 gebildet und besteht somit aus Polyamid 6 und 40 Gew.-% Kohlefasern.

Die vorliegende Erfindung beruht weiter auf dem allgemeinen Gedanken, einen nach dem zuvor beschriebenen Verfahren hergestellten Wasserstandsensor in einem Kraftstofffilter einzusetzen. Hierdurch ist es möglich, eine besonders exakte Erfassung eines Wasserstandes, insbesondere in einem Wassersammelraum des Kraftstofffilters, zu ermöglichen, mit einem vergleichsweise einfach und kostengünstig herzustellenden Wasserstandsensor.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Schnittdarstellung durch ein erfindungsgemäßes Kraftstofffilter mit einem erfindungsgemäß hergestellten Wasserstandsensor,
- Fig. 2: einen Wasserstandsensor gemäß der Fig. 1,
- Fig. 3: unterschiedliche Herstellungsmöglichkeiten des Wasserstandsensors zu Verbesserung dessen elektrischer Leitfähigkeit an einer Oberfläche.

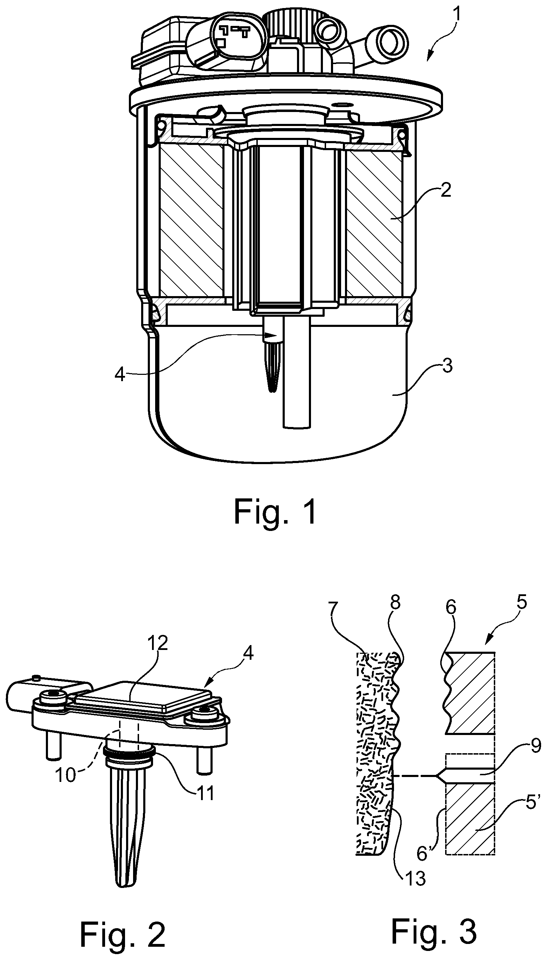

Entsprechend der Fig. 1, weist ein erfindungsgemäßes Kraftstofffilter 1 ein darin angeordnetes Ringfilterelement 2 sowie einen unterhalb des Ringfilterelements 2 angeordneten Wassersammelraum 3 auf. Der Wassersammelraum 3 dient dabei in bekannter Weise zum Sammeln des aus dem gefilterten Kraftstoff abgeschiedenen Wassers, um insbesondere eine Korrosionsgefahr in einem nachfolgend angeordneten Verbrennungsmotor reduzieren zu können. Um dabei abschätzen zu können, wann der Wassersammelraum 3 geleert werden muss, muss ein Wasserstand in diesem erfasst werden, wozu ein Wasserstandsensor 4 (vgl. auch Fig. 2) vorgesehen ist. Der Wasserstandsensor 4 wird dabei im allseits bekannten Kunststoffspritzgussverfahren hergestellt, wobei der hierfür verwendete Kunststoff faserverstärkt ist und elektrisch leitende Fasern 7, wie beispielsweise Kohlefasern, aufweist. Bei bislang derartig hergestellten Wasserstandsensoren bestand jedoch oftmals das Problem, dass sich aufgrund einer glatten Innenkontur einer Kunststoffspritzgussform eine Spritzhaut 13 bildete, in welcher ein lediglich reduzierter Anteil an Fasern 7 vorhanden war, worunter die elektrische Leitfähigkeit litt. Die vorliegende Erfindung ändert nunmehr das Verfahren derart, dass die elektrisch leitenden Fasern 7, d.h. beispielsweise die Kohlefasern, bis an die Oberfläche des Wasserstandsensors 4 reichen und dadurch dessen elektrische Leitfähigkeit und auch dessen Messgenauigkeit verbessert werden können.

Bei dem erfindungsgemäßen Verfahren zur Herstellung eines Wasserstandsensors 4 eines Kraftstofffilters 1 aus Kunststoff wird somit zunächst ein faserverstärkter und elektrisch leitender Kunststoff in eine Kunststoffspritzgussform 5 (vgl. Fig. 3) eingespritzt. Diese Kunststoffspritzgussform 5 kann dabei alternativ eine raue, insbesondere eine genarbte, Oberfläche 6 (vgl. ebenfalls die Fig. 3) aufweisen und dadurch beim Einspritzen des Kunststoffs des Wasserstandsensors 4 Turbulenzen erzeugen, welche dazu führen, dass einzelne Fasern 7 bis an eine Oberfläche 8 des Wasserstandsensors 4 reichen und dadurch dessen elektrische Leitfähigkeit deutlich verbessert. Alternativ aber gleichwertig hierzu ist es auch denkbar, dass die Kunststoffspritzgussform 5' eine glatte Oberfläche 6' aufweist und die hierdurch am Wasserstandsensor 4 ebenfalls hergestellte glatte Oberfläche 8 nachträglich aufgeraut wird. Beim nachträglichen Aufrauen wird die Spritzhaut 13 bis zu den Fasern 7 zumindest teilweise abgetragen. Beide alternative Ausführungsformen des erfindungsgemäßen Verfahrens ermöglichen es dabei, dass beim fertigen Wasserstandsensor 4 zumindest einzelne Fasern 7, insbesondere Kohlefasern, an der Oberfläche 8 liegen bzw. mit dieser in Kontakt stehen und dadurch die elektrische Leitfähigkeit deutlich verbessern.

Betrachtet man die erste alternative Ausführungsform des erfindungsgemäßen Verfahrens, wird bei dieser bevorzugt eine Kunststoffspritzgussform 5 mit einer Oberflächenrauigkeit von 0,01-0,1 mm verwendet. Bereits diese geringfügige Rauigkeiten sorgen für Turbulenzen beim Einspritzen des Kunststoffs in die Kunststoffspritzgussform 5 und ermöglichen dadurch einen direkten Kontakt der in den Kunststoff des Wasserstandsensors 4 eingebetteten Fasern 7 mit der Oberfläche 8. Die Oberflächenrauigkeit der Oberfläche 6 der Kunststoffspritzgussform 5 überträgt sich dabei auf die Oberfläche 8 des Wasserstandsensors 4.

Betrachtet man die zweite Alternative des erfindungsgemäßen Verfahrens, so kann man die zunächst aufgrund der glatten Oberfläche 6' der Kunststoffspritzgussform 5' auch glatte Oberfläche 8 des Wasserstandsensors 4 nachträglich aufrauen, beispielsweise mittels Sandstrahlen oder mittels CO₂-Strahlen. Besonders das CO₂-Strahlen, d.h. das Strahlen mit Trockeneis, bietet dabei den großen Vorteil, dass sich das Strahlgut, nämlich das Trockeneis, nach dem Gebrauch in gasförmiges CO₂ umwandelt und dadurch in die Umgebung verflüchtigt. Ein Einsammeln und Entsorgen von Strahlgut, wie dies beispielsweise beim Sandstrahlen erforderlich ist, muss demzufolge nicht erfolgen, ebenso wenig wie ein Reinigen des Wasserstandsensors 4 bzw. dessen Oberfläche 8.

Alternativ zum Sandstrahlen bzw. CO₂-Strahlen kann die Oberfläche 8 des Wasserstandsensors 4 beispielsweise auch mittels eines Lasers 9 (vgl. Fig. 3) aufgeraut werden, oder aber mittels chemischer Verfahren, beispielsweise mittels eines Ätzverfahrens, bei welchem ein die Oberfläche 8 des Wasserstandsensors 4 angreifende chemische Lösung aufgebracht wird.

Als elektrisch leitfähiger Kunststoff wird erfindungsgemäß ein faserverstärkter Thermoplast mit zumindest 8 Gew.-% Kohlefasern eingesetzt. Die Kohlenfasern bewirken dabei nicht nur die elektrische Leitfähigkeit, sondern steifen des Wasserstandsensor 4 zusätzlich aus. Selbstverständlich können auch weitere aussteifende Fasern 7, wie beispielsweise Glasfasern, als Verstärkungselement in dem elektrisch leitfähigen Kunststoff eingebettet sein. Ein besonders bevorzugter elektrisch leitfähiger Kunststoff für die Anwendung bei dem erfindungsgemäßen Wasserstandsensor 4 ist beispielsweise ein PA6 CF40 mit Polyamid 6, 40 Gew.-% Kohlefasern. Durch einen höheren Kohlefaseranteil und/oder Rußanteil kann eine verbesserte Oberflächenleitfähigkeit hergestellt werden. Der Erhöhung des Kohlefaseranteils bis auf 40 Gew.-%, erhöht die Wahrscheinlichkeit von ununterbrochenen Leitbahnen durch den Kunststoff deutlich. Das heißt die Leitfähigkeit nimmt zu (Widerstand ab). Der hohe Anteil an Fasern 7 des Kunststoffes garantiert darüber hinaus hervorragende Festigkeitswerte. Damit eignet sich das Material für Kunststoffgehäuse. Gleichzeitig kann dieser Kunststoff hervorragend ESD Spannungen abführen, wenn er als Gehäusewerkstoff verwendet wird. Im Kontakt mit Kraftstoffen und Wasser in Verbindung mit Gleichstrom von der Messelektronik verhält sich der Werkstoff im Gegensatz zu Metallen inert, was ebenfalls einen erheblichen Vorteil darstellt.

Selbstverständlich kann der erfindungsgemäße Wasserstandsensor 4 auch separat zum Kraftstofffilter 1 angeboten werden, beispielsweise als Ersatz- und/oder Nachrüstteil.

Selbstverständlich ist es darüber hinaus vorstellbar, während des Kunststoffspritzgießens des erfindungsgemäßen Wasserstandsensors 4 zugleich leitfähige Kontaktstellen 10 mit in den Kunststoff des Wasserstandsensors 4 einzuspritzen, wodurch ein zusätzlicher Kontakt eingespart werden kann. Die Kontaktstellen 10 sind dabei gemäß der Fig. 2 des Steckpins ausgebildet, wobei sie selbstverständlich auch als Gewinde 11, als Bajonett oder als Clipsverbindung hergestellt werden können. Bei der Ausbildung der elektrischen Kontaktstellen 10 als Gewinde 11 würden bei dem Wasserstandsensor 4 gemäß der Fig. 2 selbstverständlich eine Brücke 12 nicht erforderlich sein. Durch die Ausgestaltung der Verbindung der Kontaktstellen 10 können sowohl alle Verbindungsteile als auch alle elektrisch leitfähigen Teile in einem einzigen Prozessschritt erzeugt werden, wodurch sich Kosten einsparen lassen.

Mit dem erfindungsgemäßen Verfahren zur Herstellung eines Wasserstandsensors 4 kann dessen elektrische Leitfähigkeit an der Oberfläche 8 deutlich verbessert und dadurch dessen Messgenauigkeit deutlich erhöht werden.

## Patentansprüche

1. Verfahren zur Herstellung eines Wasserstandsensors (4) eines Kraftstofffilters (1) aus elektrisch leitfähigem Kunststoff, bei dem
- ein faserverstärkter Kunststoff in eine Kunststoffspritzgussform (5,5') eingespritzt wird, wobei
- eine Kunststoffspritzgussform (5) mit einer rauen, insbesondere einer genarbten Oberfläche (6), verwendet wird, oder
- eine Kunststoffspritzgussform (5') mit einer glatten Oberfläche (6') verwendet und eine Oberfläche (8) des Wasserstandsensors (4) aufgeraut wird,
sodass beim fertigen Wasserstandsensor (4) zumindest einzelne Fasern an der Oberfläche (8) liegen und wobei der elektrisch leitfähige Kunststoff ein faserverstärkter Thermoplast mit Kohlefasern mit zumindest 8 Gew.-%, vorzugsweise ca. 40 Gew.-%, oder mit Metallfasern ist.

2. Verfahren nach Anspruch 1, erste Alternative,
**dadurch gekennzeichnet,**
**dass** eine Kunststoffspritzgussform (5) mit einer Rauigkeit von 0,01 mm bis 0,1 mm verwendet wird.

3. Verfahren nach Anspruch 1, zweite Alternative,
**dadurch gekennzeichnet,**
**dass** die Oberfläche (8) des Wasserstandsensors (4) mittels Sandstrahlen oder mittels CO₂-Strahlen aufgeraut wird.

4. Verfahren nach Anspruch 1, zweite Alternative,
**dadurch gekennzeichnet,**
**dass** die Oberfläche (8) des Wasserstandsensors (4) mittels eines Lasers (9) aufgeraut wird.

5. Verfahren nach Anspruch 1, zweite Alternative oder nach Anspruch 3 oder 4,
**dadurch gekennzeichnet,**
**dass** die Oberfläche (8) des Wasserstandsensors (4) chemisch aufgeraut, insbesondere geätzt, wird.

6. Verfahren nach einem der vorhergehenden Ansprüche,
**dadurch gekennzeichnet,**
**dass** der elektrisch leitfähige Kunststoff Glasfasern als Verstärkungselemente aufweist.

7. Verfahren nach einem der vorhergehenden Ansprüche,
**dadurch gekennzeichnet,**
- **dass** der elektrisch leitfähige Kunststoff ein PA66 GF22 CF8 ist und Polyamid 66 mit 22 Gew.-% Glasfasern und 8 Gew.-% Kohlefasern aufweist, oder
- **dass** der elektrisch leitfähige Kunststoff ein PA66 CF40 ist und Polyamid 66 mit 40-Gew.-% Kohlefasern aufweist.

8. Wasserstandsensor (4), hergestellt nach dem Verfahren nach einem der vorhergehenden Ansprüche.

9. Kraftstofffilter (1) mit zumindest einem Wasserstandsensor (4) nach Anspruch 8.

## Claims

1. Method for producing a water-level sensor (4) of a fuel filter (1) made of electroconductive plastic, wherein
- a fibre-reinforced plastic is injected into a plastic injection mould (5,5'), wherein
- a plastic injection mould (5) having a rough, in particular grained surface (6), is used, or
- a plastic injection mould (5') having a smooth surface (6') is used and a surface (8) of the water-level sensor (4) is roughened,
so that at least individual fibres lie on the surface (8) in the finished water-level sensor (4) and wherein the electroconductive plastic is a fibre-reinforced thermoplastic with carbon fibres with at least 8 wt.%, preferably about 40 wt.%, or with metal fibres.

2. Method according to claim 1, first alternative,
**characterised in that**
a plastic injection mould (5) is used with a roughness of 0.01 mm to 0.1 mm.

3. Method according to claim 1, second alternative,
**characterised in that**
the surface (8) of the water-level sensor (4) is roughened by means of sandblasting or by means of CO₂ radiation.

4. Method according to claim 1, second alternative,
**characterised in that**
the surface (8) of the water-level sensor (4) is roughened by means of a laser (9).

5. Method according to claim 1, second alternative or according to claim 3 or 4,
**characterised in that**
the surface (8) of the water-level sensor (4) is chemically roughened, in particular etched.

6. Method according to any of the preceding claims,
**characterised in that** the electroconductive plastic includes glass fibres as reinforcing elements.

7. Method according to any of the preceding claims,
**characterised in that**,
- the electroconductive plastic is a PA66 GF22 CF8 and polyamide 66 22 wt.% glass fibre and 8 wt.% carbon fibre includes, or
- the electroconductive plastic is a PA66 CF40 and polyamide 66 40 wt.% carbon fibre includes.

8. Water-level sensor (4), produced according to the method according to any of the preceding claims.

9. Fuel filter (1) with at least one water-level sensor (4) according to claim 8.

## Revendications

1. Procédé de fabrication d'un capteur de niveau d'eau (4) d'un filtre à carburant (1) en plastique électriquement conducteur, dans lequel
- un plastique renforcé par des fibres est injecté dans un moule de coulée par injection en plastique (5,5'), dans lequel
- on utilise un moule de coulée par injection en plastique (5) avec une surface rugueuse (6), en particulier une surface grainée, ou
- on utilise un moule de coulée par injection en plastique (5') avec une surface lisse (6') et on rend rugueuse une surface (8) du capteur de niveau d'eau (4),
de telle sorte que, lorsque la fabrication du capteur de niveau d'eau (4) est terminée, au moins des fibres individuelles se trouvent au niveau de la surface (8), et dans lequel le plastique électriquement conducteur est un thermoplastique renforcé avec des fibres de carbone pour au moins 8 % en poids, de préférence environ 40 % en poids, ou avec des fibres métalliques.

2. Procédé selon la revendication 1, première possibilité,
**caractérisé en ce qu'**
on utilise un moule de coulée par injection en plastique (5) avec une rugosité de 0,01 mm à 0,1 mm.

3. Procédé selon la revendication 1, seconde possibilité,
**caractérisé en ce que**
la surface (8) du capteur de niveau d'eau (4) est rendue rugueuse par sablage ou par jets de CO₂.

4. Procédé selon la revendication 1, seconde possibilité,
**caractérisé en ce que**
la surface (8) du capteur de niveau d'eau (4) est rendue rugueuse au moyen d'un laser (9).

5. Procédé selon la revendication 1, seconde possibilité, ou selon la revendication 3 ou 4,
**caractérisé en ce que**
la surface (8) du capteur de niveau d'eau (4) est rendue rugueuse par un moyen chimique, en particulier est corrodée.

6. Procédé selon l'une quelconque des revendications précédentes,
**caractérisé en ce que**
le plastique électriquement conducteur présente des fibres de verre comme éléments de renfort.

7. Procédé selon l'une quelconque des revendications précédentes,
**caractérisé en ce que**
- le plastique électriquement conducteur est un PA66 GF22 CF8 et présente du polyamide 66 avec 22 % en poids de fibres de verre et 8% en poids de fibres de carbone, ou
- le plastique électriquement conducteur est un PA66 CF40 et présente du polyamide 66 avec 40 % en poids de fibres de carbone.

8. Capteur de niveau d'eau (4), fabriqué selon le procédé selon l'une quelconque des revendications précédentes.

9. Filtre à carburant (1) avec au moins un capteur de niveau d'eau (4) selon la revendication 8.
